# EUROPEAN PATENT APPLICATION

(11) **EP 4 199 171 A1**
(43) Date of publication of application: **21.06.2023**
(21) Application number: 21856276.7
(22) Date of filing: 13.08.2021
(51) Int. Cl.: H01M 10/0587, H01M 10/04, C09J 7/22, C09J 7/38, C09J 133/04

(54) **SECONDARY BATTERY AND METHOD FOR MANUFACTURING SECONDARY BATTERY**

(30) Priority: 14.08.2020 KR 20200102758
(71) Applicant: LG Energy Solution, Ltd., Seoul 07335 (KR)
(72) Inventor: KIM, Ro Un, Daejeon 34122 (KR); KIM, Do Gyun, Daejeon 34122 (KR); HWANGBO, Kwang Su, Daejeon 34122 (KR); PARK, Jeong Eon, Daejeon 34122 (KR)
(74) Representative: Goddar, Heinz J.
(86) International application number: PCT/KR2021/010778
(87) International publication number: WO 2022/035270

(57) **Abstract**

The present invention relates to a secondary battery and a method for manufacturing the secondary battery. The secondary battery comprises an electrode assembly in which electrodes and separators are alternatively stacked to be wound, a battery case in which the electrode assembly and an electrolyte are accommodated, and a fixing tape adhering on an outer surface of the electrode assembly to prevent the electrode assembly from being unwound, wherein the fixing tape is weakened in fixing force for suppressing unwinding when being impregnated in the electrolyte so that the winding of the electrode assembly is released to be filled in a space between the battery case and the electrode assembly.

## Description

### CROSS-REFERENCE TO RELATED APPLICATION

The present application claims the benefit of the priority of Korean Patent Application No. 10-2020-0102758, filed on August 14, 2020, which is hereby incorporated by reference in its entirety.

### TECHNICAL FIELD

The present invention relates to a secondary battery and a method for manufacturing the secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Among them, the jelly-roll type electrode assembly is widely used because the jelly-roll type electrode assembly has an advantage is easily manufactured and has high energy density per weight.

The cylindrical batteries comprising the jelly roll-type electrode assembly use a finishing tape made of a PET or PP material to prevent the jelly roll from being loosen and to protect the jelly roll from external damage.

The jelly roll fixed with the finishing tape made of the PET or PP material has a problem in which the jelly roll moves inside a cell if there is an empty space inside the cell.
[Prior Art Document] (Patent Document) Korean Patent Publication No. 10-2016-0010121

### DISCLOSURE OF THE INVENTION

### TECHNICAL PROBLEM

One aspect of the present invention is to provide a secondary battery capable of preventing an electrode assembly from moving and a method for manufacturing the secondary battery.

Another aspect of the present invention is to provide a secondary battery capable of reducing battery resistance and a method for manufacturing the secondary battery.

### TECHNICAL SOLUTION

A secondary battery according to an embodiment of the present invention comprises an electrode assembly in which electrodes and separators are alternatively stacked to be wound, a battery case in which the electrode assembly and an electrolyte are accommodated, and a fixing tape adhering on an outer surface of the electrode assembly to prevent the electrode assembly from being unwound, wherein the fixing tape is weakened in fixing force for suppressing unwinding when being impregnated in the electrolyte so that the winding of the electrode assembly is released to be filled in a space between the battery case and the electrode assembly.

A method for manufacturing a secondary battery according to an embodiment of the present invention comprises a winding process of alternately stacking electrodes and separators to wind the electrodes and the separators, thereby forming an electrode assembly, a tape adhesion process of allowing a fixing tape to adhere to an outer surface of the electrode assembly, thereby preventing unwinding, and an accommodation process of accommodating the electrode assembly and an electrolyte in a battery case, wherein, in the tape adhesion process, the fixing tape, which is weakened in fixing force for suppressing the unwinding when being impregnated in the electrolyte, is used, and in the accommodation process, when accommodating the electrolyte, as the fixing force of the fixing tape is weakened, the electrode assembly is unwound to be filled in a space between the battery case and the electrode assembly.

### ADVANTAGEOUS EFFECTS

According to the present invention, the fixing force that suppresses the unwinding due to the weakness of the fixing force for suppressing the unwinding when being impregnated in the electrolyte may be released. Therefore, the winding of the electrode assembly may be released to be filled in the space between the battery case and the electrode assembly to prevent the electrode assembly from moving.

In this case, the negative electrode may be wound around the outermost surface of the electrode assembly, and when the winding of the electrode assembly is released, the negative electrode may be in contact with the inner surface of the battery case to significantly reduce the battery resistance.

### BRIEF DESCRIPTION OF THE DRAWINGS

FIG. 1 is a perspective view of a secondary battery according to an embodiment of the present invention.
FIG. 2 is a cross-sectional view illustrating an example of a state before winding of an electrode assembly is released in the secondary battery according to an embodiment of the present invention.
FIG. 3 is a cross-sectional view illustrating an example of a state in which the winding of the electrode assembly is released in the secondary battery according to an embodiment of the present invention.
FIG. 4 is a cross-sectional view illustrating an example of a state before winding of an electrode assembly is released in a secondary battery according to another embodiment of the present invention.
FIG. 5 is a cross-sectional view illustrating an example of a state in which the winding of the electrode assembly is released in the secondary battery according to another embodiment of the present invention.
FIG. 6 is a perspective view of a secondary battery according to further another embodiment of the present invention.
FIG. 7 is a cross-sectional view illustrating an example of a state before winding of an electrode assembly is released in the secondary battery according to further another embodiment of the present invention.
FIG. 8 is a photograph illustrating a state before a fixing tape reacts with an electrolyte in the secondary battery of the present invention.
FIG. 9 is a photograph illustrating a state in which the fixing tape is dissolved by reacting with the electrolyte in the secondary battery of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Secondary battery according to an embodiment

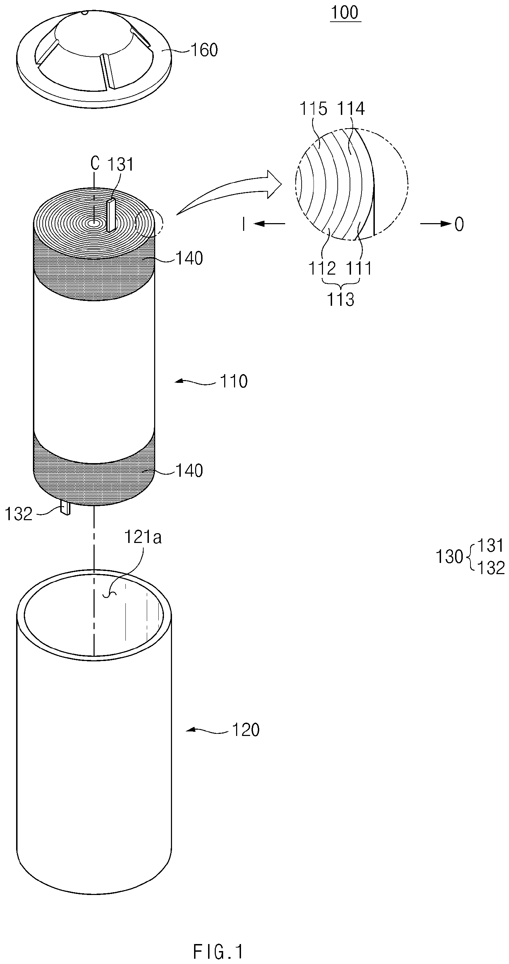

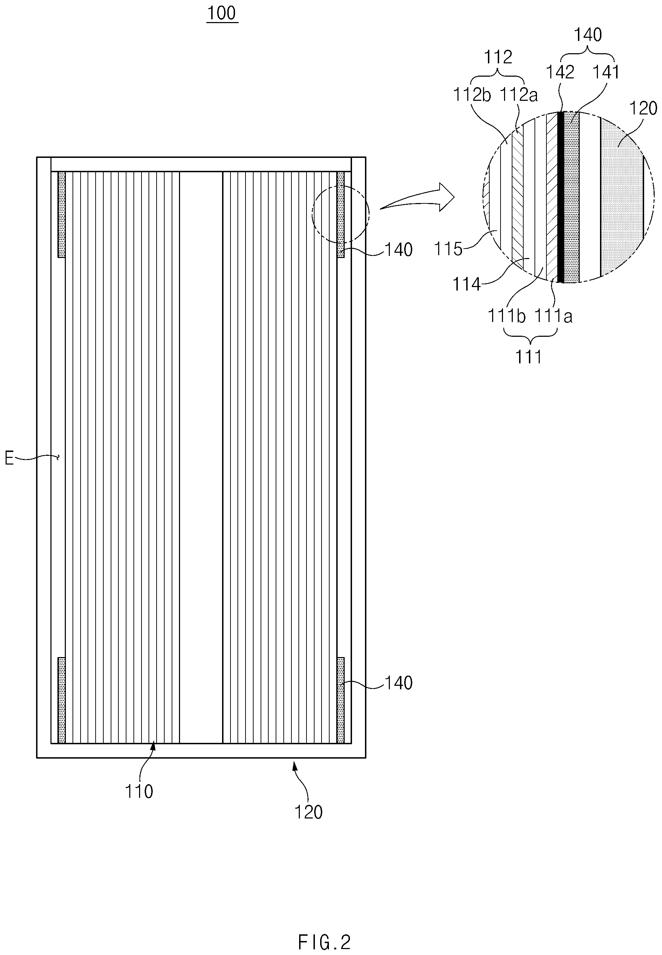

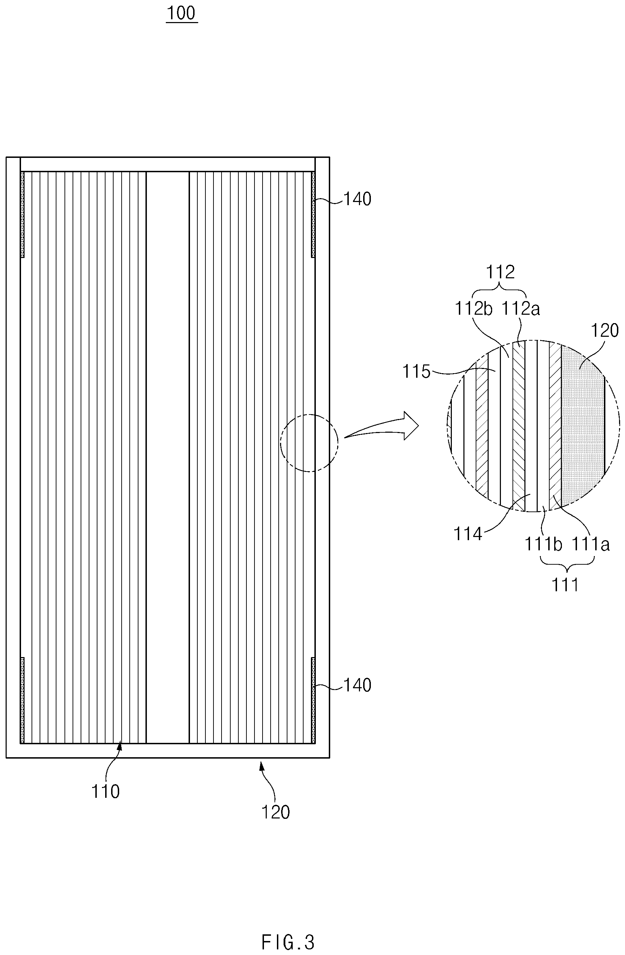

FIG. 1 is a perspective view of a secondary battery according to an embodiment of the present invention, FIG. 2 is a cross-sectional view illustrating an example of a state before winding of an electrode assembly is released in the secondary battery according to an embodiment of the present invention, and FIG. 3 is a cross-sectional view illustrating an example of a state in which the winding of the electrode assembly is released in the secondary battery according to an embodiment of the present invention. Here, in FIGS. 2 and 3, a cap will be omitted.

Referring to FIGS. 1 to 3, a secondary battery 100 according to an embodiment of the present invention comprises an electrode assembly 110, in which electrodes 113 and separators 114 and 115 are alternately stacked to be wound, a battery case 120 in which the electrode assembly 110 and an electrolyte are accommodated, and a fixing tape 140 adhering on an outer surface of the electrode assembly 110.

Hereinafter, the secondary battery 100 according to an embodiment of the present invention will be described in more detail with reference to FIGS. 1 to 3.

Referring to FIGS. 1 and 3, the electrode assembly 110 may be a chargeable and dischargeable power generation element and have a structure in which the electrodes 113 and the separators 114 and 115 are combined to be alternately stacked with each other. Here, the electrode assembly 110 may be formed in a shape in which the electrodes 113 and the separators 114 and 115 are alternately combined to be wound. Here, an electrode assembly 110 may be wound in a cylindrical shape wound around a central axis C.

The electrodes 113 may comprise a positive electrode 112 and a negative electrode 111. Also, each of the separators 114 and 115 separates and electrically insulates the positive electrode 112 and the negative electrode 111 from each other.

The positive electrode 112 may comprise a positive electrode collector 112a and a positive electrode active material 112b provided on one surface of the positive electrode collector 112a. Here, the positive electrode 112 may comprise a positive electrode non-coating portion that is an area on which the positive electrode active material 112b is not stacked.

The positive electrode collector 112a may be provided as, for example, foil made of an aluminum material.

The positive electrode active material 112b may comprise lithium manganese oxide, lithium cobalt oxide, lithium nickel oxide, lithium iron phosphate, or a compound or mixture containing at least one of the above-described materials.

The negative electrode 111 may comprise a negative electrode collector 111a and a negative electrode active material 111b provided on one surface of the negative electrode collector 111a. Here, the negative electrode 111 may comprise a negative electrode non-coating portion that is an area on which the negative electrode active material 111 is not stacked.

The negative electrode collector 111a may be made of, for example, copper foil made of a copper (Cu) material.

The negative electrode active material 111b may comprise, for example, synthetic graphite, lithium a metal, a lithium alloy, carbon, petroleum coke, activated carbon, graphite, a silicon compound, a tin compound, a titanium compound, or an alloy thereof. Here, the negative electrode active materials 111b may further comprise, for example, non-graphite-based silica (SiO) or silica carbide (SiC).

The negative electrode 111 may be wound around the outermost surface of the electrode assembly 110 and may be in contact with an inner surface of the battery case 120 when the electrode assembly 110 is unwound. Here, in the negative electrode 111, the negative electrode collector 111a may be disposed on the outermost surface when the electrode assembly 110 is wound and may be in contact with the inner surface of the battery case 120 when the electrode assembly 110 is unwound. Thus, the battery resistance may be reduced. That is, when only the negative electrode tab 132 is in contact with the inner surface of the battery case 120, a lot of resistance may be applied to the negative electrode tab 132 to generate high heat and cause a problem in which a negative electrode tab 132 is melted or disconnected. In the present invention, the negative collector 111a may be disposed on the outermost surface of the electrode assembly 110, and when the winding is released, the negative collector 111a may be in contact with the inner surface of the battery case 120 to significantly reduce the resistance.

Each of the separators 114 and 115 may be made of an insulating material to insulate the positive electrode 112 and the negative electrode 111 from each other.

Also, each of the separators 114 and 115 may be, for example, a multi-layered film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

The battery case 120 may have an upwardly opened accommodation part 121a in which the electrode assembly 110 is accommodated. Here, the battery case 120 may be formed in, for example, a cylindrical shape.

Also, the battery case 120 may have an accommodation part 121a having an opened upper portion through which the electrode assembly 110 and the electrolyte are accommodated. Here, the secondary battery 100 according to an embodiment of the present invention may comprise a top cap 160 covering the upper portion of the battery case 120.

Here, the inner surface of the battery case 120 may comprise a metal material.

The battery case 120 may be connected to the negative electrode 111 of the electrode assembly 110 to form the negative electrode 111, and the top cap 160 may be connected to the positive electrode 112 of the electrode assembly 110 to form the positive electrode 112. Here, the battery case 120 and the top cap 160 may be insulated from each other.

An insulating layer may be provided between a bottom surface of the battery case 120 and a lower portion of the electrode assembly 110 to insulate the electrode assembly 110 from the battery case 120. In this case, the negative electrode tab 132 connected to the negative electrode 111 of the electrode assembly 110 may pass through the insulating layer so as to be in contact with the bottom surface of the battery case 120.

An electrode tab 130 is attached to the electrode 113 and is electrically connected to the electrode 113.

The electrode tab 130 may comprise a positive electrode tab 131 attached to the positive electrode 112 and a negative electrode tab 132 attached to the negative electrode 111.

The positive electrode tab 131 may be formed in an upward direction in which a cap 30 is disposed in FIG. 1, and the negative electrode tab 132 may be disposed in a downward direction, i.e., toward a bottom surface of an accommodation part 121a of a battery case 120.

Here, the electrolyte may comprise salt, a solvent, and an additive.

The salt may comprise lithium salt. In this case, the lithium salt may comprise at least one or more of LiCl, LiBr, LiI, LiClO4, LiBF4, LiB10Cl10, LiPF6, LiCF3SO3, LiCF3CO2, LiAsF6, LiSbF6, LiAlCl4, CH3SO3Li, CF3SO3Li, (CF3SO2)2NLi, lithium chloroborane, lower aliphatic lithium carboxylic acid, 4phenyl lithium borate, imide, LiTFSI, LiFSI, and LiBOB.

For example, the solvent may comprise an aprotic organic solvent such as N-methyl-2-pyrrolidone, propylene carbonate, ethylene carbonate, butylene carbonate, dimethyl carbonate, diethyle carbonate, gamma-butyrolacton, 1,2-dimethoxy ethane, tetrahydroxy franc, 2-methyl tetrahydrofuran, dimethyl sulfoxide, 1,3-dioxolane, formamide, dimethyl formamide, dioxolane, acetonitrile, nitromethane, methyl formate, methyl acetate, phosphoric acid tri-ester, trimethoxy methane, dioxolane derivatives, sulfolan, methyl sulfolan, 1,3-dimethyl-2-imidazolidinone, a propylene carbonate derivative, a tetrahydrofuran derivative, ether, methyl propionate, and ethyl propionate.

The additive may comprise at least one or more of vinylene carbonate (VC), fluorobenzene (FB), vinylene carbonate (VC), fluoro ethylene carbonate (FEC), propane sultone (PS), ethylene sulfite (Esa), and LiBF4.

The fixing tape 140 may adhere to the outer surface of the electrode assembly 110 to prevent unwinding.

The fixing tape 140 may be weakened in fixing force for suppressing the unwinding of the electrode assembly 110 when being impregnated in the electrolyte and then be filled in a space between the battery case 120 and the electrode assembly 110. Here, the fixing tape 140 may comprise a reaction material that is dissolved by reacting with the electrolyte. Thus, when accommodating the electrolyte, the reaction material is dissolved to release the fixing force for suppressing the unwinding. Thus, the electrode assembly 110 is unwound to be filled in the space E between the battery case 120 and the electrode assembly 110, thereby preventing the electrode assembly 110 from moving. In this case, a gap between a winding center I and a winding outer shell O of the electrode assembly 110 may be wider as the winding of the electrode assembly 110 is released.

The reaction material may be made of at least one of oriented polystyrene (OPS), thermo plastic polyurethane (TPU), or general purpose polystyrene (GPPS), which is dissolved by reacting with the electrolyte.

The fixing tape 140 may comprise a base film 141 and an adhesive layer 142 provided on one surface of the base film 141.

The adhesive layer 142 may comprise the reaction material, and thus, when the electrolyte is accommodated in the battery case, in which the electrode assembly 110 is accommodated, the adhesive layer 142 may be dissolved to be lost in adhesive force. Thus, the suppression of unwinding of the electrode assembly 110 through the fixing tape 140 may be released.

The fixing tape 140 may, for example, adhere to upper and lower portions of an outer circumferential surface of the electrode assembly 110. Here, the fixing tape 140 may adhere along a width direction of the electrode assembly 110. Here, the fixing tape 140 may adhere to a winding end of the electrode assembly 110 and a peripheral portion of the winding end on the outer circumferential surface of the electrode assembly 110 or may adhere while being wrapped around the outer circumferential surface.

Also, for another example, the fixing tape 140 may adhere over the upper and lower portions on the outer circumferential surface of the electrode assembly 110. Here, the fixing tape 140 may adhere along a longitudinal direction of the electrode assembly 110. In this case, the fixing tape 140 may be formed in a rectangular shape and may be attached over the winding end of the electrode assembly 110 and the peripheral portion of the winding end.

The secondary battery 100, which has the above-described configuration, according to an embodiment of the present invention comprises the reaction material dissolved by reacting with the electrolyte on the fixing tape 140 that adheres to the outer surface of the electrode assembly 110 to prevents the unwinding. Thus, as the reaction material is dissolved when accommodating the electrolyte, and thus, the fixing force that suppresses the unwinding is released, the electrode assembly 110 may be unwound to be filled in the space E between the battery case 120 and the electrode assembly 110, thereby preventing the electrode assembly 110 from moving.

Here, the negative electrode 111 may be wound around the outermost surface of the electrode assembly 110 and may be in contact with an inner surface of the battery case 120 when the electrode assembly 110 is unwound. Thus, the battery resistance may be significantly reduced.

### Secondary battery according to another embodiment

Hereinafter, a secondary battery according to another embodiment will be described.

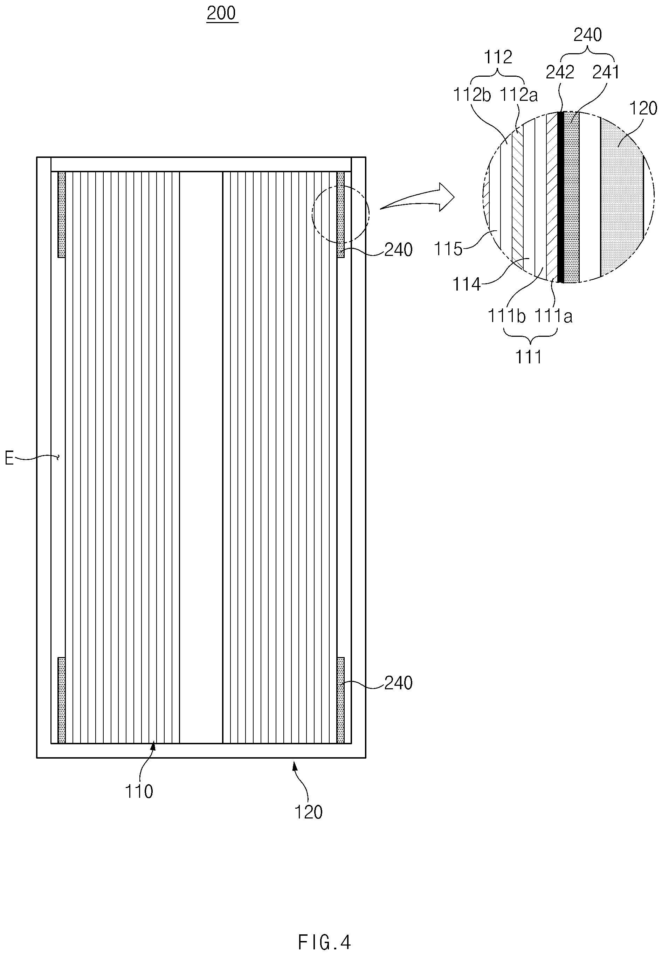

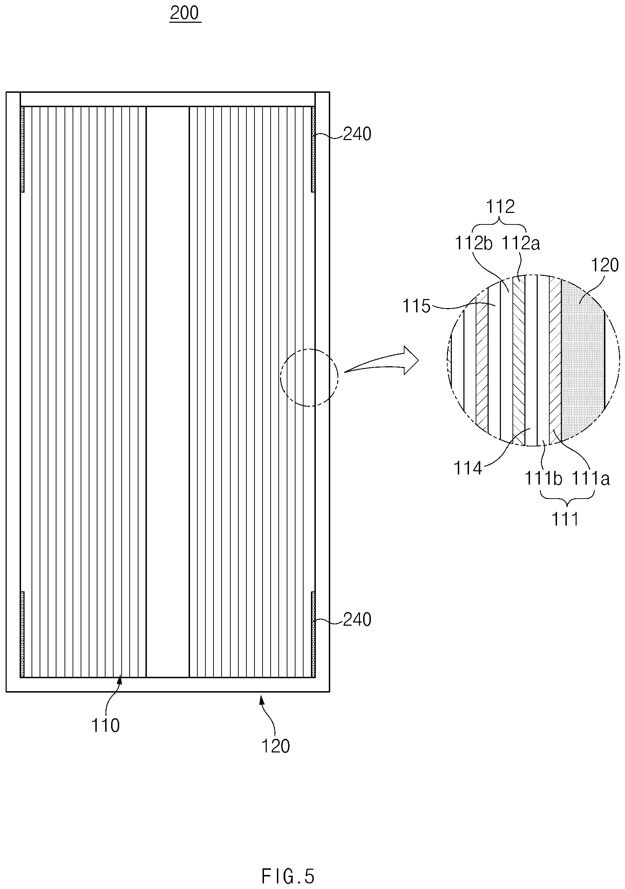

FIG. 4 is a cross-sectional view illustrating an example of a state before winding of an electrode assembly is released in a secondary battery according to another embodiment of the present invention, and FIG. 5 is a cross-sectional view illustrating an example of a state in which the winding of the electrode assembly is released in the secondary battery according to another embodiment of the present invention. Here, in FIGS. 4 and 5, a cap will be omitted.

Referring to FIGS. 4 and 5, a secondary battery according to another embodiment of the present invention comprises an electrode assembly 110, in which electrodes 113 and separators 114 and 115 are alternately stacked to be wound, a battery case 120 in which the electrode assembly 110 and an electrolyte are accommodated, and a fixing tape 240 adhering to an outer surface of the electrode assembly 110.

The secondary battery 200 according to another embodiment of the present invention is different from the secondary battery according to the foregoing embodiment in portion at which a reaction material is disposed on the fixing tape 240. Thus, contents of this embodiment, which are duplicated with those according to the forgoing embodiment, will be omitted or briefly described, and also, differences therebetween will be mainly described.

In more detail, the electrode assembly 110 may be a chargeable and dischargeable power generation element and have a structure in which electrodes 113 and separator 114 and 115 are combined and alternately stacked. Here, the electrode assembly 110 may be formed in a shape in which the electrodes 113 and the separators 114 and 115 are alternately combined to be wound. Here, the electrode assembly 110 may be wound in a cylindrical shape wound around a central axis C.

The electrodes 113 may comprise a positive electrode 112 and a negative electrode 111. Also, each of the separators 114 and 115 separates and electrically insulates the positive electrode 112 and the negative electrode 111 from each other.

The positive electrode 112 may comprise a positive electrode collector 112a and a positive electrode active material 112b provided on one surface of the positive electrode collector 112a. Here, the positive electrode 112 may comprise a positive electrode non-coating portion that is an area on which the positive electrode active material 112b is not stacked.

The negative electrode 111 may comprise a negative electrode collector 111a and a negative electrode active material 111b provided on one surface of the negative electrode collector 111a. Here, the negative electrode 111 may comprise a negative electrode non-coating portion that is an area on which the negative electrode active material 111 is not stacked.

The negative electrode collector 111a may be made of, for example, copper foil made of a copper (Cu) material.

The negative electrode 111 may be wound around the outermost surface of the electrode assembly 110 and may be in contact with an inner surface of the battery case 120 when the electrode assembly 110 is unwound. Here, in the negative electrode 111, the negative electrode collector 111a may be disposed on the outermost surface when the electrode assembly 110 is wound and may be in contact with the inner surface of the battery case 120 when the electrode assembly 110 is unwound. Thus, the battery resistance may be reduced. That is, when only the negative electrode tab 132 is in contact with the inner surface of the battery case 120, a lot of resistance may be applied to the negative electrode tab 132 to generate high heat and cause a problem in which a negative electrode tab 132 is melted or disconnected. In the present invention, the negative collector 111a may be disposed on the outermost surface of the electrode assembly 110, and when the winding is released, the negative collector 111a may be in contact with the inner surface of the battery case 120 to significantly reduce the resistance.

Each of the separators 114 and 115 may be made of an insulating material to insulate the positive electrode 112 and the negative electrode 111 from each other.

The battery case 120 may have an upwardly opened accommodation part in which the electrode assembly 110 is accommodated. Here, the battery case 120 may be formed in, for example, a cylindrical shape.

Also, the battery case 120 may have an accommodation part 121a having an opened upper portion through which the electrode assembly 110 and the electrolyte are accommodated. Here, the secondary battery 200 according to another embodiment of the present invention may comprise a top cap covering the upper portion of the battery case 120. Here, the inner surface of the battery case 120 may comprise a metal material.

The battery case 120 may be connected to the negative electrode 111 of the electrode assembly 110 to form the negative electrode 111, and the top cap 160 may be connected to the positive electrode 112 of the electrode assembly 110 to form the positive electrode 112. Here, the battery case 120 and the top cap 160 may be insulated from each other.

An insulating layer may be provided between a bottom surface of the battery case 120 and a lower portion of the electrode assembly 110 to insulate the electrode assembly 110 from the battery case 120. In this case, the negative electrode tab 132 connected to the negative electrode 111 of the electrode assembly 110 may pass through the insulating layer so as to be in contact with the bottom surface of the battery case 120.

An electrode tab 130 is attached to the electrode 113 and is electrically connected to the electrode 113.

The electrode tab 130 may comprise a positive electrode tab 131 attached to the positive electrode 112 and a negative electrode tab 132 attached to the negative electrode 111.

The fixing tape 240 may adhere to the outer surface of the electrode assembly 110 to prevent unwinding.

The fixing tape 240 may be weakened in fixing force for suppressing the unwinding of the electrode assembly 110 when being impregnated in the electrolyte and then be filled in a space between the battery case 120 and the electrode assembly 110. Here, the fixing tape 240 may comprise a reaction material that is dissolved by reacting with the electrolyte. Thus, when accommodating the electrolyte, the reaction material is dissolved to release the fixing force for suppressing the unwinding. Thus, the electrode assembly 110 is unwound to be filled in the space E between the battery case 120 and the electrode assembly 110, thereby preventing the electrode assembly 110 from moving.

Here, the reaction material may be made of at least one of oriented polystyrene (OPS), thermo plastic polyurethane (TPU), or general purpose polystyrene (GPPS), which is dissolved by reacting with the electrolyte.

The fixing tape 240 may comprise a base film 241 and an adhesive layer 242 provided on one surface of the base film 241.

As the base film 241 comprises the reaction material and thus is dissolved when accommodating the electrolyte, the suppression of unwinding of the electrode assembly 110 through the fixing tape 240 may be released.

The fixing tape 240 may adhere to upper and lower portions of an outer circumferential surface of the electrode assembly 110.

### Secondary battery according to further another embodiment

Hereinafter, a secondary battery according to further another embodiment will be described.

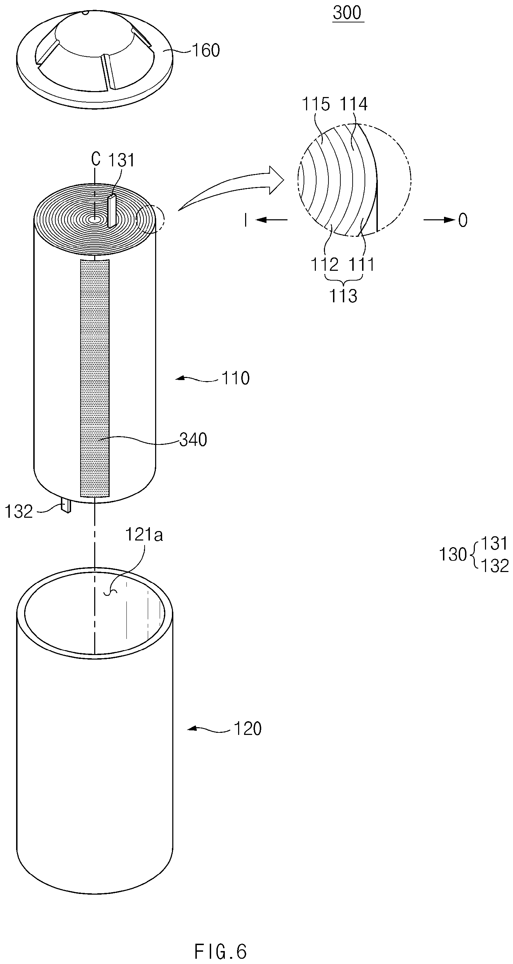

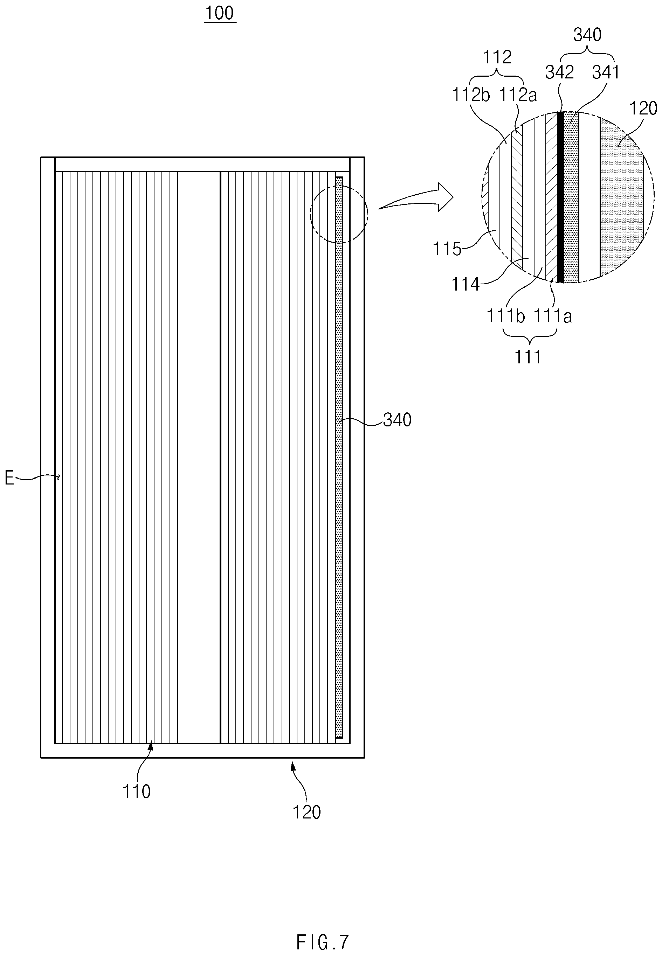

FIG. 6 is a perspective view of a secondary battery according to further another embodiment of the present invention, and FIG. 7 is a cross-sectional view illustrating an example of a state before winding of an electrode assembly is released in the secondary battery according to further another embodiment of the present invention.

Referring to FIGS. 6 and 7, a secondary battery 300 according to another embodiment of the present invention comprises an electrode assembly 110, in which electrodes 113 and separators 114 and 115 are alternately stacked to be wound, a battery case 120, in which the electrode assembly 110 and an electrolyte are accommodated, and a fixing tape 340 adhering to an outer surface of the electrode assembly 110.

The secondary battery 300 according to further another embodiment of the present invention is different from the secondary batteries according to the foregoing embodiments in configuration of the fixing tape 340. Thus, contents of this embodiment, which are duplicated with those according to the foregoing embodiments, will be omitted or briefly described, and also, differences therebetween will be mainly described.

In more detail, the electrode assembly 110 may be a chargeable and dischargeable power generation element and have a structure in which an electrode 113 and a separator 114,115 are combined and alternately stacked. Here, the electrode assembly 110 may be formed in a shape in which the electrodes 113 and the separator 114,115 are alternately combined to be wound. Here, the electrode assembly 110 may be wound in a cylindrical shape wound around a central axis C.

The electrodes 113 may comprise a positive electrode 112 and a negative electrode 111. Also, the separator 114,115 separates and electrically insulates the positive electrode 112 and the negative electrode 111 from each other.

The positive electrode 112 may comprise a positive electrode collector 112a and a positive electrode active material 112b provided on one surface of the positive electrode collector 112a. Here, the positive electrode 112 may comprise a positive electrode non-coating portion that is an area on which the positive electrode active material 112b is not stacked.

The negative electrode 111 may comprise a negative electrode collector 111a and a negative electrode active material 111b provided on one surface of the negative electrode collector 111a. Here, the negative electrode 111 may comprise a negative electrode non-coating portion that is an area on which the negative electrode active material 111 is not stacked.

The negative electrode collector 111a may be made of, for example, copper foil made of a copper (Cu) material.

The negative electrode 111 may be wound around the outermost surface of the electrode assembly 110 and may be in contact with an inner surface of the battery case 120 when the electrode assembly 110 is unwound. Here, in the negative electrode 111, the negative electrode collector 111a may be disposed on the outermost surface when the electrode assembly 110 is wound and may be in contact with the inner surface of the battery case 120 when the electrode assembly 110 is unwound. Thus, the battery resistance may be reduced. That is, when only the negative electrode tab 132 is in contact with the inner surface of the battery case 120, a lot of resistance may be applied to the negative electrode tab 132 to generate high heat and cause a problem in which a negative electrode tab 132 is melted or disconnected. In the present invention, the negative collector 111a may be disposed on the outermost surface of the electrode assembly 110, and when the winding is released, the negative collector 111a may be in contact with the inner surface of the battery case 120 to significantly reduce the resistance. Each of the separators 114 and 115 may be made of an insulating material to insulate the positive electrode 112 and the negative electrode 111 from each other.

The battery case 120 may have an upwardly opened accommodation part in which the electrode assembly 110 is accommodated. Here, the battery case 120 may be formed in, for example, a cylindrical shape.

Also, the battery case 120 may have an accommodation part 121a having an opened upper portion through which the electrode assembly 110 and the electrolyte are accommodated. Here, the secondary battery 200 according to further another embodiment of the present invention may comprise a top cap 160 covering the upper portion of the battery case 120. Here, the inner surface of the battery case 120 may comprise a metal material.

The battery case 120 may be connected to the negative electrode 111 of the electrode assembly 110 to form the negative electrode 111, and the top cap 160 may be connected to the positive electrode 112 of the electrode assembly 110 to form the positive electrode 112. Here, the battery case 120 and the top cap 160 may be insulated from each other.

An insulating layer may be provided between a bottom surface of the battery case 120 and a lower portion of the electrode assembly 110 to insulate the electrode assembly 110 from the battery case 120. In this case, the negative electrode tab 132 connected to the negative electrode 111 of the electrode assembly 110 may pass through the insulating layer so as to be in contact with the bottom surface of the battery case 120.

An electrode tab 130 is attached to the electrode 113 and is electrically connected to the electrode 113.

The electrode tab 130 may comprise a positive electrode tab 131 attached to the positive electrode 112 and a negative electrode tab 132 attached to the negative electrode 111.

The fixing tape 340 may adhere to the outer surface of the electrode assembly 110 to prevent unwinding.

The fixing tape 340 may be weakened in fixing force for suppressing the unwinding of the electrode assembly 110 when being impregnated in the electrolyte and then be filled in a space between the battery case 120 and the electrode assembly 110 to prevent the electrode assembly 110 from moving.

For example, when the fixing tape 340 is impregnated in the electrolyte, the electrolyte may be permeated between the fixing tape 340 and the electrode assembly 110 to reduce an adhesive area, thereby reducing adhesive force. Also, for another example, when the fixing tape 340 is impregnated in the electrolyte, the fixing tape 340 may be expanded to be reduced in adhesive force. When the electrode assembly 110 is charged while the fixing tape 340 is impregnated in the electrolyte to be weakened in adhesive force, the electrode assembly 110 may be expanded, and thus, the fixing force of the fixing tape 340 may be better released.

The fixing tape 340 may comprise a base film 341 and an adhesive layer 342 provided on one surface of the base film 341.

In addition, the adhesive layer 342 of the fixing tape 340 may have low adhesive strength by using a low adhesion adhesive. Thus, the adhesive force may be better reduced when being immersed in the electrolyte to more easily release of the fixing force that suppress the unwinding of the electrode assembly 110.

Here, the fixing tape 340 may be made of, for example, an acrylic-based adhesive in which the adhesive layer 342 is a low-adhesion adhesive. here, the adhesive strength may be further reduced by further comprising a curing agent in the adhesive layer 342.

For another example, the fixing tape 340 may reduce the adhesive force by reducing a thickness of the adhesive layer 342 to have low adhesive force. Here, for example, the thickness of the adhesive layer 342 may be reduced by 50% or more.

In addition, for another example, the fixing tape 340 may further comprise a curing agent in the adhesive layer 342 to have low adhesive strength. That is, the adhesive layer 342 may be cured through the curing agent and thus be reduced in adhesive strength. Here, the curing agent may be, for example, isocyanate. For example, the fixing tape 340 may adhere over upper and lower portions on an outer circumferential surface of the electrode assembly 110. Here, the fixing tape 340 may adhere along a longitudinal direction of the electrode assembly 110. In this case, the fixing tape 340 may be formed in a rectangular shape and may be attached over the winding end of the electrode assembly 110 and the peripheral portion of the winding end.

Also, for another example, the fixing tape 340 may adhere to each of the upper and lower portions on the outer circumferential surface of the electrode assembly 110. Here, the fixing tape 340 may adhere along a width direction of the electrode assembly 110.

A battery pack comprising the secondary batteries, which are configured as described above, according to an embodiment to further another embodiment.

### Method for manufacturing secondary battery according to an embodiment

Hereinafter, a method for manufacturing a secondary battery according to an embodiment of the present invention will be described.

Referring to FIGS. 1 to 3, the method for manufacturing the secondary battery according to an embodiment of the present invention comprises a winding process of alternately stacking electrodes 113 and separators 114 and 115 to wind the electrodes 113 and the separators 114 and 115, thereby forming an electrode assembly 110, a tape adhesion process of allowing the fixing tape 140 to adhere to an outer surface of the electrode assembly 110, and an accommodation process of accommodating an electrolyte in the battery case 120.

The method for manufacturing the secondary battery according to an embodiment of the present invention relates to a method for manufacturing the secondary battery according to the foregoing embodiment of the present invention.

Thus, in the method for manufacturing the secondary battery according to an embodiment of the present invention, contents duplicated with those of the method for manufacturing the secondary battery according to the foregoing embodiment will be omitted or briefly described, and also, only differences therebetween will be described.

In more detail, in the winding process, the electrodes 113 and the separators 114 and 115 may be alternately stacked to be wound, thereby forming the electrode assembly 110.

Here, the electrodes 113 comprise a positive electrode 112 and a negative electrode 111. In this case, the negative electrode 111 may comprise a negative electrode collector 111a and a negative electrode active material 111b provided on one surface of the negative electrode collector 111a.

In the winding process, the negative electrode 111 may be wound to be disposed on the outermost surface of the electrode assembly 110. In this case, in the winding process, more specifically, the negative electrode collector 111a may be wound to be disposed on the outermost surface of the electrode assembly 110.

In the tape adhesion process, the fixing tape 140 may adhere to the outer surface of the electrode assembly 110 to prevent unwinding.

In the tape adhesion process, the fixing tape 140, which is weakened in fixing force for suppressing the unwinding of the electrode assembly 110 when being impregnated in the electrolyte may be used. Here, in the tape adhesion process, the fixing tape 140 comprising a reaction material that reacts with the electrolyte and thus is dissolved may be used.

In the tape adhesion process, the fixing tape 140 may adhere to upper and lower portions on the outer circumferential surface of the electrode assembly 110.

In the accommodation process, the electrode assembly 110 and the electrolyte may be accommodated in the battery case 120.

In the accommodation process, as the reaction material is dissolved when accommodating the electrolyte, and thus, the fixing force of the fixing tape 140, which suppresses the unwinding, is released, the electrode assembly 110 may be unwound to be filled in a space between the battery case 120 and the electrode assembly 110.

Also, in the accommodation process, when the winding of the electrode assembly 110 is released, an inner surface of the battery case 120 and the negative electrode 111 may be in contact with each other. Here, in the accommodation process, when the winding of the electrode assembly 110 is released, the inner surface of the battery case 120 comprising a metal material and the negative electrode collector 111a may be in contact with each other.

In the tape adhesion process, a fixing tape 140 comprising a base film 141 and an adhesive layer 142 containing a reaction material and provided on one surface of base film 141 may be used to adhere to the electrode assembly 110. Thus, in the accommodation process, when the electrolyte is accommodated, the adhesive layer 142 may be dissolved to be lost in adhesive force, and thus, and the winding of the electrode assembly 110 may be released.

### Method for manufacturing secondary battery according to another embodiment

Hereinafter, a method for manufacturing a secondary battery according to another embodiment of the present invention will be described.

Referring to FIGS. 4 to 5, the method for manufacturing the secondary battery according to another embodiment of the present invention comprises a winding process of alternately stacking electrodes 113 and separators 114 and 115 to wind the electrodes 113 and the separators 114 and 115, thereby forming an electrode assembly 110, a tape adhesion process of allowing the fixing tape 240 to adhere to an outer surface of the electrode assembly 110, and an accommodation process of accommodating an electrolyte in the battery case 120.

The method for manufacturing the secondary battery according to another embodiment of the present invention is different from the method for manufacturing the secondary battery according to the foregoing embodiment of the present invention in portion at which a reaction material is disposed on a fixing tape 240. Thus, contents of this embodiment, which are duplicated with those according to the forgoing embodiment, will be omitted or briefly described, and also, differences therebetween will be mainly described.

In more detail, in the winding process, the electrodes 113 and the separators 114 and 115 may be alternately stacked to be wound, thereby forming the electrode assembly 110.

Here, the electrodes 113 comprise a positive electrode 112 and a negative electrode 111. In this case, the negative electrode 111 may comprise a negative electrode collector 111a and a negative electrode active material 111b provided on one surface of the negative electrode collector 111a.

In the winding process, the negative electrode 111 may be wound to be disposed on the outermost surface of the electrode assembly 110. In this case, in the winding process, more specifically, the negative electrode collector 111a may be wound to be disposed on the outermost surface of the electrode assembly 110.

In the tape adhesion process, the fixing tape 240 may adhere to the outer surface of the electrode assembly 110 to prevent unwinding.

In the tape adhesion process, the fixing tape 240, which is weakened in fixing force for suppressing the unwinding of the electrode assembly 110 when being impregnated in the electrolyte may be used.

Here, in the tape adhesion process, the fixing tape 240 comprising a reaction material that reacts with the electrolyte and thus is dissolved may be used.

In the tape adhesion process, the fixing tape 240 may adhere to upper and lower portions on the outer circumferential surface of the electrode assembly 110.

In the accommodation process, the electrode assembly 110 and the electrolyte may be accommodated in the battery case 120.

In the accommodation process, as the reaction material is dissolved when accommodating the electrolyte, and thus, the fixing force of the fixing tape 240, which suppresses the unwinding, is released, the electrode assembly 110 may be unwound to be filled in a space between the battery case 120 and the electrode assembly 110.

Also, in the accommodation process, when the winding of the electrode assembly 110 is released, an inner surface of the battery case 120 and the negative electrode 111 may be in contact with each other. Here, in the accommodation process, when the winding of the electrode assembly 110 is released, the inner surface of the battery case 120 comprising a metal material and the negative electrode collector 111a may be in contact with each other.

In the tape adhesion process, a fixing tape 240 comprising a base film 241 containing a reaction material and an adhesive layer 242 provided on one surface of base film 241 may be used to adhere to the electrode assembly 110. Thus, in the accommodation process, when the electrolyte is accommodated, the base film 241 may be dissolved, and thus, and the winding of the electrode assembly 110 may be released.

### Method for manufacturing secondary battery according to further another embodiment

Hereinafter, a method for manufacturing a secondary battery according to further another embodiment of the present invention will be described.

Referring to FIGS. 6 to 7, the method for manufacturing the secondary battery according to further another embodiment of the present invention comprises a winding process of alternately stacking electrodes 113 and separators 114 and 115 to wind the electrodes 113 and the separators 114 and 115, thereby forming an electrode assembly 110, a tape adhesion process of allowing a fixing tape 340 to adhere to an outer surface of the electrode assembly 110, and an accommodation process of accommodating the electrode assembly 110 and an electrolyte in a battery case 120.

The method for manufacturing the secondary battery according to further another embodiment of the present invention is different from the method for manufacturing the secondary battery according to the foregoing embodiment and another embodiment of the present invention in fixing tape 340. Thus, contents of this embodiment, which are duplicated with those according to the forgoing embodiment, will be omitted or briefly described, and also, differences therebetween will be mainly described.

In more detail, in the winding process, the electrodes 113 and the separators 114 and 115 may be alternately stacked to be wound, thereby forming the electrode assembly 110.

Here, the electrodes 113 comprise a positive electrode 112 and a negative electrode 111. In this case, the negative electrode 111 may comprise a negative electrode collector 111a and a negative electrode active material 111b provided on one surface of the negative electrode collector 111a.

In the winding process, the negative electrode 111 may be wound to be disposed on the outermost surface of the electrode assembly 110. In this case, in the winding process, more specifically, the negative electrode collector 111a may be wound to be disposed on the outermost surface of the electrode assembly 110.

In the tape adhesion process, the fixing tape 340 may adhere to the outer surface of the electrode assembly 110 to prevent unwinding.

In the tape adhesion process, the fixing tape 340, which is weakened in fixing force for suppressing the unwinding of the electrode assembly 110 when being impregnated in the electrolyte, may be used.

In the tape adhesion process, the fixing tape 340 may adhere to upper and lower portions on the outer circumferential surface of the electrode assembly 110.

In the accommodation process, the electrode assembly 110 and the electrolyte may be accommodated in the battery case 120.

In the accommodation process, when accommodating the electrolyte, as the fixing force of the fixing tape 340, which suppresses the unwinding, is weakened, the electrode assembly 110 may be unwound to be filled in a space between the battery case 120 and the electrode assembly 110.

Also, in the accommodation process, when the winding of the electrode assembly 110 is released, an inner surface of the battery case 120 and the negative electrode 111 may be in contact with each other. Here, in the accommodation process, when the winding of the electrode assembly 110 is released, the inner surface of the battery case 120 comprising a metal material and the negative electrode collector 111a may be in contact with each other.

In the tape adhesion process, a fixing tape 340 comprising a base film 341 and an adhesive layer 342 provided on one surface of base film 341 may be used to adhere to the electrode assembly 110. In the tape adhesion process, the adhesive layer 342 of the fixing tape 340 may be provided as a low-adhesion adhesive.

Here, in the tape adhesion process, for example, the adhesive layer 342 may use a fixing tape 340 comprising an acrylic-based adhesive that is the low adhesion adhesive. In this case, in the tape adhesion process, the adhesive strength may be further reduced by further comprising a curing agent in the adhesive layer 342.

In the tape adhesion process, for another example, the fixing tape 340 in which the adhesive force is reduced by reducing a thickness of the adhesive layer 342 to have low adhesive force may be used. Here, for example, the thickness of the adhesive layer 342 may be reduced by 50% or more.

Furthermore, for another example, in the tape adhesion process, the fixing tape 340 further comprising a curing agent in the adhesive layer 342 to have low adhesive force may be used. That is, the adhesive layer 342 may be cured through the curing agent and thus be reduced in adhesive strength. Here, the curing agent may be, for example, isocyanate. Also, the adhesive force may be adjusted by adjusting a type and ratio of the curing agent.

In the tape adhesion process, for example, the fixing tape 340 may adhere over upper and lower portions on an outer circumferential surface of the electrode assembly 110. Here, the fixing tape 340 may adhere along a longitudinal direction of the electrode assembly 110. In this case, the fixing tape 340 may be formed in a rectangular shape and may be attached over the winding end of the electrode assembly 110 and the peripheral portion of the winding end.

Also, in the tape adhesion process, for another example, the fixing tape 340 may adhere to each of the upper and lower portions on an outer circumferential surface of the electrode assembly 110. Here, the fixing tape 340 may adhere along a width direction of the electrode assembly 110.

### <Experimental Example>

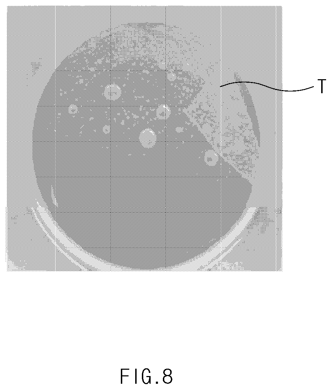

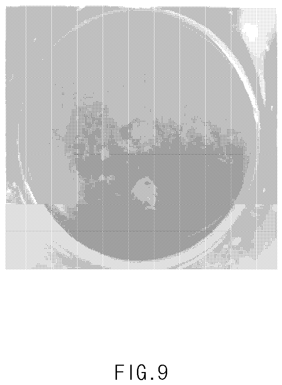

FIG. 8 is a photograph illustrating a state before a fixing tape reacts with an electrolyte in the secondary battery of the present invention, and FIG. 9 is a photograph illustrating a state in which the fixing tape is dissolved by reacting with the electrolyte in the secondary battery of the present invention. Here, FIG. 8 is a photograph showing immediately after a fixing tape is impregnated in an electrolyte, and FIG. 9 is a photograph showing when one hour elapses after the fixing tape is impregnated in the electrolyte.

Referring to FIGS. 8 and 9, a fixing tape T applied to the secondary battery of the present invention was impregnated in an electrolyte to perform a dissolution test on a fixing tape T.

Here, dimethyl carbonate (DMC), ethylmethyl carbonate (EMC), and ethylene carbonate (EC) were used as a solvent of the electrolyte solution.

Also, the fixing tape T was a thermo plastic polyurethane (TPU) tape was used.

As illustrated in FIGS. 8 and 9, the electrode assembly may be prevented from being unwound by using the fixing tape T containing the reaction material that reacts with the electrolyte and is dissolved. Here, it is seen that when the electrode assembly is accommodated in the battery case containing the electrolyte, the fixing tape T is dissolved, and thus, the electrode assembly is unwound. As a result, it is seen that the electrode assembly is unwound to be filled in the space between the battery case and the electrode assembly, and also, it is seen that when the electrode assembly is unwound, the outermost surface of the electrode assembly is in contact with the inner surface of the battery case.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

100, 200: Secondary battery
110: Electrode assembly
111: Negative electrode
111a: Negative electrode collector
111b: Negative electrode active material
112: Positive electrode
112a: Positive electrode collector
112b: Positive electrode active material
113: Electrode
114, 115: Separator
120: Battery case
121a: Accommodation part
130: Electrode tab
131: Positive electrode tab
132: Negative electrode tab
140, 240: Fixing tape
141, 241: Base film
142, 242: Adhesive layer
160: Top cap
C: Central axis
I: Winding center
O: Winding outer shell
E: Space

## Claims

1. A secondary battery comprising:
an electrode assembly in which electrodes and separators are alternatively stacked to be wound;
a battery case in which the electrode assembly and an electrolyte are accommodated; and
a fixing tape adhering on an outer surface of the electrode assembly to prevent the electrode assembly from being unwound,
wherein the fixing tape is weakened in fixing force for suppressing unwinding when being impregnated in the electrolyte so that the winding of the electrode assembly is released to be filled in a space between the battery case and the electrode assembly.

2. The secondary battery of claim 1, wherein the fixing tape comprises:
a base film; and
an adhesive layer provided on one surface of the base film.

3. The secondary battery of claim 2, wherein the adhesive layer comprises a reaction material, which is dissolved by reacting with the electrolyte, so that the adhesive layer is dissolved when the electrolyte is accommodated so as to be lost in adhesive force.

4. The secondary battery of claim 2, wherein as the base film comprises a reaction material, which is dissolved by reacting with the electrolyte, and the base film is dissolved when the electrolyte is accommodated, the suppression of unwinding of the electrode assembly through the fixing tape is released.

5. The secondary battery of claim 3 or 4, wherein the reaction material is made of at least one of oriented polystyrene (OPS), thermo plastic polyurethane (TPU), or general purpose polystyrene (GPPS), which is dissolved by reacting with the electrolyte.

6. The secondary battery of claim 2, wherein the adhesive layer comprises an acrylic-based adhesive that is a low-adhesion adhesive, and
when being impregnated in the electrolyte, adhesive force is reduced so that the winding of the electrode assembly is released.

7. The secondary battery of claim 2 or 6, wherein the adhesive layer further comprises a curing agent to have low adhesive force.

8. The secondary battery of claim 1, wherein the fixing tape adheres to upper and lower portions on an outer circumferential surface of the electrode assembly.

9. The secondary battery of claim 1, wherein the fixing tape adheres over upper and lower portions on an outer circumferential surface of the electrode assembly, wherein the fixing tape adheres over a winding end of the electrode assembly and a peripheral portion of the winding end.

10. The secondary battery of claim 1, wherein the electrode comprises a positive electrode and a negative electrode, and
the negative electrode is wound around the outermost surface of the electrode assembly so as to be in contact with an inner surface of the battery case when the winding of the electrode assembly is released.

11. The secondary battery of claim 10, wherein the negative electrode comprises a negative electrode collector and an active material provided on one surface of the negative electrode collector,
when the electrode assembly is wound, the negative electrode collector is disposed on the outermost surface, and when the winding is released, the negative electrode collector is in contact with an inner surface of the battery case, and
the inner surface of the battery case contains a metal material.

12. A method for manufacturing a secondary battery, the method comprising:
a winding process of alternately stacking electrodes and separators to wind the electrodes and the separators, thereby forming an electrode assembly;
a tape adhesion process of allowing a fixing tape to adhere to an outer surface of the electrode assembly, thereby preventing unwinding; and
an accommodation process of accommodating the electrode assembly and an electrolyte in a battery case,
wherein, in the tape adhesion process, the fixing tape, which is weakened in fixing force for suppressing the unwinding when being impregnated in the electrolyte, is used, and
in the accommodation process, when accommodating the electrolyte, as the fixing force of the fixing tape is weakened, the electrode assembly is unwound to be filled in a space between the battery case and the electrode assembly.

13. The method of claim 12, wherein, in the tape adhesion process, the fixing tape adheres to upper and lower portions on an outer circumferential surface of the electrode assembly.

14. The method of claim 12, wherein, in the tape adhesion process, the fixing tape adheres over upper and lower portions on an outer circumferential surface of the electrode assembly, wherein the fixing tape adheres over a winding end of the electrode assembly and a peripheral portion of the winding end.

15. The method of claim 12, wherein the electrode comprises a positive electrode and a negative electrode,
in the winding process, the negative electrode is wound to be disposed on the outermost surface of the electrode assembly, and
in the accommodation process, when the winding of the electrode assembly is released, an inner surface of the battery case and the negative electrode are in contact with each other.

16. The method of claim 15, wherein the negative electrode comprises a negative electrode collector and an active material provided on one surface of the negative electrode collector,
in the winding process, the negative electrode collector is wound to be disposed on the outermost surface of the electrode, and
in the accommodation process, when the winding of the electrode assembly is released, the inner surface of the battery case comprising a metal material and the negative electrode collector are in contact with each other.

17. The method of claim 12, wherein, in the tape adhesion process, the fixing tape comprising a base film and an adhesive layer containing a reaction material, which is dissolved by reacting with the electrolyte, and provided on one surface of base film is used to adhere to the electrode assembly, and
in the accommodation process, when the electrolyte is accommodated, the adhesive layer is dissolved to be lost in adhesive force so that the winding of the electrode assembly is released.

18. The method of claim 12, wherein, in the tape adhesion process, the fixing tape comprising a base film containing a reaction material, which is dissolved by reacting with the electrolyte, and an adhesive layer provided on one surface of base film is used to adhere to the electrode assembly, and
in the accommodation process, when the electrolyte is accommodated, the base film is dissolved so that the winding of the electrode assembly is released.

19. The method of claim 12, wherein, in the tape adhesion process, the fixing tape comprising a base film and an adhesive layer containing an acrylic-based adhesive that is a low-adhesion adhesive and provided on one surface of the base film is used to adhere to the electrode assembly, and
in the accommodation process, when the electrolyte is accommodated, the adhesive layer is reduced in adhesive force so that the winding of the electrode assembly is released.

20. The method of claim 12, wherein, in the tape adhesion process, the fixing tape comprising a base film and an adhesive layer comprising a curing agent to have low adhesive force and provided on one surface of the base film is used to adhere to the electrode assembly, and
in the accommodation process, when the electrolyte is accommodated, the adhesive layer is reduced in adhesive force so that the winding of the electrode assembly is released.
